# DEMANDE DE BREVET EUROPEEN

(11) **EP 0 794 026 A1**
(43) Date de publication de la demande: **10.09.1997**
(21) Numéro de dépôt: 97400310.5
(22) Date de dépôt: 11.02.1997
(51) Int. Cl.: B23H 7/08, B21F 19/00

(54) **Procédé de fabrication d'un fil stratifié de petit diamètre et en particulier d'un fil électrode pour usinage par électroérosion et fil électrode obtenu**

(30) Priorité: 26.02.1996 FR 9602360
(71) Demandeur: Sprint Métal - Société de Production Internationale de Tréfiles, 92800 Puteaux (FR)
(72) Inventeur: Laverroux, Michel, 91600 Savigny-Sur-Orge (FR)
(74) Mandataire: Bouget, Lucien

(57) **Abrégé**

On réalise un revêtement sur la surface externe d'un produit long à section circulaire (10) au moins partiellement en acier, dont le diamètre est supérieur au diamètre de l'âme du fil stratifié à obtenir, par placage sur la surface externe du produit long (10) chauffé, de deux bandes métalliques (12a, 12b) comprenant chacune un feuillard en un alliage de composition homogène renfermant du cuivre, du nickel et du zinc ; les bandes métalliques (12a, 12b) sont chauffées et appliquées avec pression contre la surface externe du produit long (10). On tréfile ensuite le produit long (15) revêtu par placage, jusqu'à obtenir le fil stratifié de petit diamètre. Le procédé permet de réaliser des fils électrodes pour usinage par électroérosion d'un diamètre compris entre 0,05 et 0,50 mm ayant une couche externe isolante.

## Description

L'invention concerne un procédé de fabrication d'un fil stratifié de petit diamètre, et en particulier d'un fil électrode pour usinage par électroérosion ainsi que le fil stratifié obtenu utilisé comme fil électrode.

Il est connu d'utiliser, pour effectuer un usinage par électroérosion, tel que le découpage ou la rectification du bord d'une pièce conductrice, un fil électrode qui est dévidé à partir d'une bobine émettrice et enroulé sur une bobine réceptrice après son passage au travers de la pièce à usiner. Pour réaliser une découpe fine de la pièce, on utilise un fil électrode de faible diamètre, ayant par exemple un diamètre de quelques dixièmes de millimètre. Le fil est maintenu de manière à être parfaitement rectiligne lors de son passage à travers la pièce et une tension mécanique constante est imposée à la portion de fil traversant la pièce. Des buses disposées au voisinage du fil projettent un liquide diélectrique dans l'espace compris entre le fil et la pièce en cours d'usinage.

Le fil électrode est relié au pôle négatif et la pièce à usiner au pôle positif d'un générateur de courant fournissant un courant électrique sous forme d'impulsions successives. Chacune des impulsions du courant électrique produit une ionisation du liquide diélectrique entre le fil électrode et la pièce, ce qui permet le passage d'un courant sous forme d'un arc. La forte température produite par l'arc électrique entraîne la fusion et la vaporisation du métal de la pièce dans une zone de très petite dimension en vis-à-vis de l'électrode. Le métal érodé par l'arc électrique est entraîné par le courant de fluide circulant entre l'électrode et la pièce. On déplace la pièce à usiner de manière à réaliser le découpage suivant une surface de coupe de forme déterminée.

On a montré que pour obtenir une vitesse d'usinage élevée, le fil électrode devait présenter une bonne conductibilité électrique permettant le passage d'une densité de courant élevée dans le fil électrode et une résistance à la rupture suffisante pour supporter la tension mécanique qui est appliquée à la portion du fil électrode traversant la pièce, en tenant compte de l'élévation de température du fil électrode provoquée par la chaleur produite par la décharge électrique et transmise au fil électrode et par effet Joule à l'intérieur du fil électrode.

Dans le cas des dispositifs les plus anciens connus dans l'état de la technique, on utilisait des fils électrodes en cuivre. Ces fils présentent une très bonne conductibilité électrique mais une faible résistance mécanique.

On a proposé d'utiliser des fils de laiton qui peuvent présenter des niveaux de résistance mécanique supérieurs à ceux du cuivre. Cependant, les fils de laiton ont comme inconvénient principal de présenter une conductibilité électrique relativement faible, par exemple de l'ordre de 27 % IACS (International Annealed Copper Standard), cette conductibilité électrique étant définie de manière relative par rapport à la conductibilité d'un fil de cuivre pur ayant les mêmes dimensions. De plus, le fil électrode est généralement porté à une température de l'ordre de 300°C pendant l'usinage par électroérosion et, à cette température, un fil de laiton a une résistance mécanique seulement légèrement supérieure à celle d'un fil de cuivre.

De manière à obtenir à la fois une résistance mécanique élevée à la température d'utilisation du fil électrode et une bonne conductibilité électrique, on a proposé d'utiliser des fils composites réalisés sous forme stratifiée. De tels fils stratifiés comportent une âme réalisée en un matériau à résistance mécanique élevée, par exemple en acier et une couche externe concentrique à l'âme en acier en un matériau bon conducteur tel que le cuivre.

Cependant, lorsque des fils d'acier recouverts d'une couche de cuivre sont utilisés comme fils électrodes, le cuivre de la couche externe est susceptible d'être arraché au fil électrode et de se déposer sur la surface de la pièce en cours d'usinage, ce qui rend la décharge électrique entre l'électrode et la pièce instable. On a donc proposé des fils comportant une âme en acier, une couche de cuivre recouvrant l'âme du fil et une ou plusieurs couches supplémentaires externes coaxiales à la couche de cuivre.

On a par exemple proposé de réaliser une couche externe renfermant un ou plusieurs matériaux à bas point de fusion et de vaporisation tel que le zinc, le cadmium, l'étain, le plomb, l'antimoine ou le bismuth qui est destinée à séparer la couche de cuivre recouvrant l'âme du fil électrode de la zone située entre la surface externe de l'électrode et la pièce dans laquelle se produisent les étincelles lors de l'usinage et à protéger l'âme du fil électrode contre les chocs thermiques provoqués par les décharges électriques, du fait que la chaleur dégagée par les décharges électriques est utilisée pour vaporiser les matériaux de la couche superficielle de l'électrode et se trouve ainsi absorbée.

Le dépôt de matériaux tels que le zinc par les procédés connus de dépôt électrolytique ou par galvanisation à chaud sur un fil de petit diamètre pour réaliser un fil électrode est une opération onéreuse. En outre, l'efficacité de la couche externe en ce qui concerne la protection de l'âme de l'électrode n'est pas optimale.

On a proposé également d'utiliser un fil électrode comportant une âme en acier recouverte de cuivre sur laquelle on réalise un placage d'une couche de laiton, c'est-à-dire d'un alliage à 65 % de cuivre et 35 % de zinc. Pour protéger de manière efficace l'âme de l'électrode, il est nécessaire de prévoir une couche de revêtement en laiton d'une épaisseur suffisante, de telle sorte que le laiton représente au moins 35 % du volume total de l'électrode. Pour obtenir un fil électrode ayant une bonne conductibilité électrique, l'âme de l'électrode doit être réalisée de manière qu'elle présente une très bonne conductibilité électrique, de l'ordre de 70 % IACS. La réalisation d'un âme conductrice à 70 % IACS est coûteuse et augmente d'autant le prix des fils électrodes réalisés. En outre, du fait que le laiton présente une conductivité thermique qui est voisine de celle du zinc, il ne constitue pas une barrière thermique protégeant l'âme du fil électrode de manière sensiblement plus efficace que le zinc.

De manière à améliorer l'effet de barrière thermique produit par une couche externe d'un fil électrode composite contenant du cuivre et du zinc, on a proposé de réaliser une couche externe dans laquelle la concentration en zinc augmente progressivement en direction de la surface extérieure de l'électrode. Cette concentration variable est obtenue en déposant une couche de zinc sur la surface externe de l'âme de l'électrode en acier recouverte de cuivre et en faisant diffuser le zinc dans la couche de cuivre par traitement thermique. Le phénomène de diffusion du zinc est difficile à contrôler, de sorte que les produits obtenus ne présentent pas des propriétés parfaitement stables dans le temps et parfaitement définies. De plus, les propriétés de la surface de l'électrode varient lorsque l'électrode est érodée au cours de l'usinage, si bien qu'il se produit des variations importantes en ce qui concerne la formation des étincelles, suivant l'épaisseur de la pièce. La diffusion du zinc dans le cuivre a également l'inconvénient d'augmenter la résistivité de la couche de cuivre et donc de rendre le fil électrode moins apte au passage d'une forte densité de courant. Enfin, le dépôt d'une couche de zinc sur l'âme de l'électrode par électrodéposition ou au trempé est une opération onéreuse lorsqu'elle est effectuée sur une âme de petit diamètre. Le traitement thermique de diffusion est également onéreux et difficile à maîtriser, en particulier dans le cas d'un fil électrode de petit diamètre.

On a proposé dans le CH-A-646.083, un fil électrode comprenant une âme en un matériau métallique bon conducteur de l'électricité, tel qu'un fil en acier recouvert de cuivre et un revêtement protecteur déposé sur la surface externe de l'âme du fil électrode constitué par un alliage contenant à la fois du nickel et du zinc, ou du nickel, du cuivre et du zinc. Ces matériaux de revêtement ont en particulier l'avantage de pouvoir présenter une conductibilité électrique et une conductibilité thermique faibles, sensiblement inférieures à la conductibilité du zinc ou du laiton. De ce fait, les matériaux constituant les couches de revêtement, en particulier les alliages ternaires nickel, cuivre, zinc sont des isolants thermiques assurant une bonne protection de l'âme du fil électrode.

De manière préférentielle, le dépôt des couches de revêtement du fil électrode est réalisé par électrodéposition de couches successives constituées par l'un des éléments nickel, cuivre et zinc ou par un mélange de deux de ces éléments. On soumet ensuite le fil sur lequel ont été réalisées les couches successives à un traitement thermique produisant une interdiffusion des éléments contenus dans les couches successives. On réalise ainsi une couche de revêtement en un alliage ayant une concentration variable dans les directions radiales du fil. Ce procédé par électrodéposition suivi d'un traitement thermique produisant une interdiffusion des éléments est rendu nécessaire lorsqu'on veut produire des couches de revêtement renfermant des alliages ternaires, dans la mesure où il n'est pas possible de produire des alliages ternaires, simplement par électrodéposition du fait des lois de la physico-chimie. Les couches réalisées par électrodéposition et traitement thermique ne présentent pas une parfaite homogénéité de composition, suivant l'épaisseur de la couche de revêtement. En outre, du fait que la diffusion ou l'interdiffusion de plusieurs éléments chimiques contenus dans des couches superposées est un phénomène difficile à maîtriser, le procédé est difficilement reproductible et le revêtement protecteur obtenu ne présente pas une composition parfaitement stable et parfaitement constante.

Il apparaît également que l'électrodéposition suivie d'un traitement thermique réalisée sur des fils de petits diamètres destinés à constituer des fils électrodes pour l'usinage par électroérosion constitue une opération coûteuse et difficile à mettre en oeuvre à une échelle industrielle.

On ne connaissait donc pas jusqu'ici de procédé permettant de fabriquer de manière parfaitement reproductible et avec des coûts de production modérés des fils électrodes de petits diamètres comportant une âme constituée par de l'acier et un matériau conducteur et une couche de revêtement protecteur en un alliage ternaire de cuivre, de nickel et de zinc ayant une composition parfaitement homogène dans toutes les zones du revêtement.

Les procédés connus de fabrication de fil électrode dont la couche externe protectrice renferme du cuivre, du nickel et du zinc et en particulier le procédé selon le CH-A-646.083 ne permettent pas non plus d'obtenir un fil dont la couche externe présente une grande dureté et assure une protection mécanique efficace du fil, lors de son passage sur les poulies de guidage de la machine d'usinage par électroérosion.

Le but de l'invention est donc de proposer un procédé de fabrication d'un fil stratifié de petit diamètre et en particulier d'un fil électrode pour usinage par électroérosion comportant une âme constituée par de l'acier et un matériau à forte conductibilité électrique et une couche externe contenant du cuivre, du nickel et du zinc, ce procédé pouvant être mis en oeuvre de manière parfaitement reproductible pour obtenir de manière non onéreuse un fil ayant une couche externe protectrice de grande dureté à faible conductivité thermique constituée par un alliage ternaire ou supérieur contenant du cuivre, du nickel et du zinc et présentant une composition parfaitement homogène dans toutes les parties du revêtement.

Dans ce but :
- on réalise un revêtement sur la surface externe d"un produit long à section circulaire au moins partiellement en acier, dont le diamètre est supérieur au diamètre de l'âme du fil stratifié à obtenir, par placage sur la surface externe du produit long chauffé de deux bandes métalliques comprenant chacune au moins une couche en un alliage de composition homogène renfermant du cuivre, du nickel et du zinc, les bandes métalliques étant chauffées et appliquées avec pression contre la surface externe du produit long, et
- on tréfile ensuite le produit long revêtu par placage jusqu'à obtenir le fil stratifié de petit diamètre.

Afin de bien faire comprendre l'invention, on va maintenant décrire, à titre d'exemple non limitatif, en se référant aux figures jointes en annexe, un mode de réalisation d'un fil électrode pour usinage par électroérosion comportant une couche externe protectrice en alliage ternaire cuivre-nickel-zinc.

La figure 1 est une vue en perspective schématique d'une machine d'usinage par électroérosion comportant un fil électrode.

La figure 2 est une vue en coupe transversale de l'âme d'une ébauche ou d'un fil électrode d'usinage par électroérosion.

La figure 3 est une vue en coupe transversale d'une ébauche ou d'un fil électrode obtenu par le procédé suivant l'invention.

La figure 4 est une vue en perspective schématique montrant la réalisation d'une opération de placage de feuillard sur un produit long métallique tel que mis en oeuvre dans la première phase du procédé suivant l'invention.

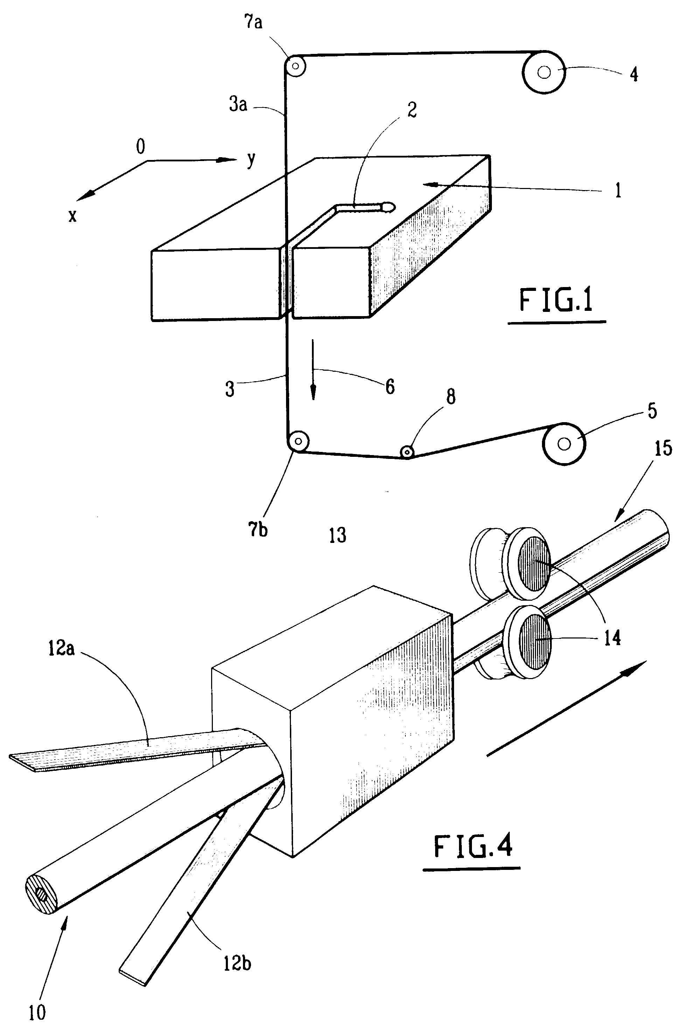

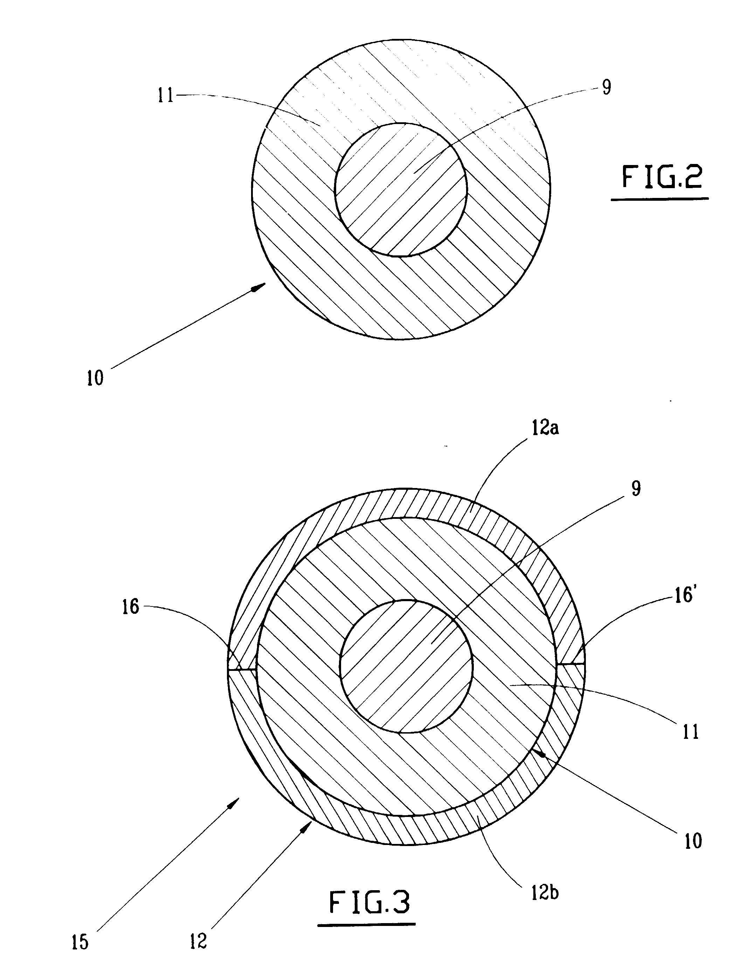

Sur la figure 1, on a représenté de manière schématique et partielle une installation d'usinage par électroérosion mise en oeuvre pour réaliser une découpe 2 suivant toute l'épaisseur d'une pièce 1 en matériau conducteur de forme sensiblement parallélépipédique. L'installation d'usinage par électroérosion comporte en particulier un fil électrode 3 qui est dévidé à partir d'une bobine émettrice 4 et enroulé sur une bobine réceptrice 5, de manière à circuler en défilement dans le sens de la flèche 6. Le fil électrode 3 comporte une partie 3a qui est maintenue dans une disposition rectiligne par deux galets de déflexion et de guidage 7a et 7b disposés de part et d'autre de la pièce 1 à usiner. Une tension mécanique déterminée est imposée au fil 3 par un rouleau 8 dont l'axe est perpendiculaire au fil électrode 3. Le rouleau 8 est monté mobile dans une direction perpendiculaire à son axe et au fil 3, de manière qu'on puisse régler sa position pour maintenir la tension mécanique sur le fil 3 constante pendant l'usinage.

Le fil électrode 3 est relié au pôle négatif d'un générateur de courant dont le pôle positif est relié à la pièce 1 en matériau conducteur. Le générateur de courant est prévu pour émettre un courant sous forme d'impulsions électriques successives qui sont appliquées entre le fil électrode 3 et la pièce 1. Des buses coaxiales au fil 3 (non représentées) permettent de projeter un liquide diélectrique qui est généralement constitué par de l'eau déionisée dans un espace ménagé entre le fil 3 et la pièce 1 à usiner.

La pièce à usiner 1 est déplacée suivant deux axes X et Y parallèles à ses grandes faces, de manière qu'on réalise la découpe 2 par déplacement relatif entre la pièce 1 et le fil électrode 3 en défilement suivant la direction 6.

Lorsqu'une impulsion électrique est envoyée dans l'électrode 3 par le générateur de courant, le diélectrique présent entre l'électrode 3 et la pièce 1 subit une ionisation, ce qui permet le passage de courant sous la forme d'une étincelle entre l'électrode 3 et la pièce 1. La forte élévation de température engendrée par la décharge électrique entraîne la fusion instantanée d'une zone de la surface de la pièce 1 en vis-à-vis de l'électrode 3. A la fin de la décharge, le refroidissement presqu'instantané de la bulle de vapeur dans le diélectrique provoque son implosion, ce qui engendre des forces dynamiques qui ont pour résultat d'éjecter le métal érodé qui est entraîné par le courant de fluide diélectrique.

Le rendement et la vitesse d'usinage obtenus par le procédé de découpage par électroérosion dépendent de paramètres tels que les performances du générateur électrique, la distance d'étincelage et le débit de liquide diélectrique. On a constaté que pour obtenir une vitesse d'usinage élevée le fil électrode devait présenter une bonne conductibilité électrique permettant le passage d'une forte densité de courant et une résistance à la rupture suffisante pour supporter la tension mécanique appliquée, compte tenu de l'élévation de température du fil électrode provoquée par les décharges électriques et l'effet Joule dû au passage du courant dans l'électrode.

Pour remplir simultanément ces deux conditions, on utilise un fil électrode comportant une âme ayant une forte résistance mécanique, de préférence en acier dont la conductivité électrique est accrue en associant à l'âme d'acier un élément à forte conductivité. Généralement, on utilise une âme constituée par un fil d'acier revêtu de cuivre.

Comme il a été expliqué plus haut, il s'est avéré souhaitable sinon nécessaire de revêtir l'âme comportant une couche externe conductrice de cuivre, par une couche de protection qui peut être constituée de manière avantageuse par un alliage ternaire ou supérieur renfermant les éléments cuivre, nickel et zinc.

Jusqu'ici, on ne connaissait pas de procédé permettant de fabriquer un fil électrode pour usinage par électroérosion ayant un diamètre compris entre 0,10 et 0,40 mm et comportant une âme constituée par de l'acier et un élément fortement conducteur tel que le cuivre recouverte par une couche de revêtement protecteur constituée par un alliage de composition homogène renfermant du cuivre, du nickel et du zinc. En particulier, on ne connaissait pas de procédé reproductible de fabrication d'un tel fil électrode qui permette d'obtenir des coûts de production modérés et qui puisse être mis en oeuvre facilement à une échelle industrielle.

Le procédé suivant l'invention qui va être décrit par la suite permet de répondre à toutes ces exigences. Ce procédé consiste à réaliser par placage de feuillards, un revêtement en un alliage de composition homogène contenant du cuivre, du nickel et du zinc, sur la surface externe d'une ébauche de l'âme du fil électrode présentant un diamètre sensiblement supérieur au diamètre de l'âme du fil électrode dont on réalise la fabrication. Dans une seconde étape, on tréfile l'ébauche revêtue par placage jusqu'à obtenir le fil stratifié à un diamètre voulu.

Dans un premier mode de mise en oeuvre de l'invention qui sera décrit ci-après, on réalise dans un premier temps une ébauche de l'âme du fil électrode sur laquelle on réalise ensuite par placage un revêtement en alliage cuivre, nickel, zinc.

Sur la figure 2, on a représenté la section transversale d'une ébauche 10 de l'âme d'un fil électrode qui comporte un élément central filiforme 9 en acier recouvert par une couche de cuivre 11 déposée coaxialement autour du fil central 9.

L'ébauche 10 de l'âme du fil électrode se présente sous la forme d'un produit long métallique composite ayant un diamètre qui peut être compris par exemple entre 8 et 10 mm.

L'élément central en acier 9 est constitué par une tige ou un fil à section circulaire présentant un diamètre qui peut être compris par exemple entre 4 et 8 mm.

On peut utiliser, pour constituer l'élément central 9 en acier, un acier au carbone contenant, notamment, jusqu'à 0,1 % en poids de carbone et jusqu'à 0,5 % en poids de manganèse.

De préférence on utilise un acier au carbone stabilisé au titane, dont la teneur en carbone est inférieure à 0,05 % en poids, et de préférence, inférieure à 0,025 % en poids, et qui renferme, en poids, de 0,10 % à 0,30 %, et de préférence de 0,15 % à 0,25 % de titane, de 0,01 % à 0,7 %, et de préférence de 0,02 % à 0,06 % d'aluminium, de 0,10 % à 0,50 %, et de préférence de 0,15 % à 0,25 % de manganèse, le reste étant du fer et des impuretés résultant de l'élaboration.

La couche de cuivre 11 peut être déposée sur l'élément central en acier 9 par une technique de placage connue, telle que par exemple le dip forming ou d'autres techniques de revêtement au trempé ou par électrodéposition.

Cependant, il est préférable de réaliser la couche de cuivre 11 sur l'élément central 9 en acier par une technique de placage de feuillards sur la surface externe de l'élément central 9, telle que décrite dans les documents US-A-3.714.701 et US-A-4.227.061. Une telle technique de placage de feuillards sur un produit long à section circulaire sera décrite par la suite en se référant à la figure 4, cette technique étant également utilisée pour réaliser le placage de l'ébauche de l'âme du fil électrode par des feuillards en alliage cuivre, nickel, zinc.

Cette technique de placage permet d'obtenir une ébauche de l'âme du fil électrode exempte d'oxydes superficiels, ce qui permet de réaliser l'opération ultérieure de placage de feuillards en alliage cuivre, nickel, zinc dans des conditions très satisfaisantes.

L'ébauche 10 de l'âme du fil électrode présente un diamètre compris entre 8 et 10 mm et est réalisée de manière que sa conductibilité électrique soit comprise entre 35 et 70 % IACS.

Comme il est visible sur la figure 4, on réalise le placage de l'ébauche 10 de l'âme du fil électrode par des feuillards 12a, 12b en alliage cuivre-nickel-zinc, en faisant passer l'ébauche 10 de l'âme du fil électrode et deux feuillards 12a, 12b destinés à être plaqués sur la surface externe de l'ébauche 10, dans un boîtier de guidage 13 puis entre les deux galets d'un jeu de galets. Le boîtier de guidage 13 comporte des surfaces de mise en forme et de guidage des feuillards 12a et 12b. En sortie du boîtier 13, l'ébauche 10 de l'âme du fil est recouverte par les feuillards 12a et 12b dont les bords latéraux de raccordement sont venus en contact.

Les galets du jeu de galets 14 comportent des gorges profilées permettant de réaliser un placage des feuillards 12a et 12b sur la surface externe de l'ébauche 10.

L'ébauche 10 est chauffée par induction et les feuillards 12a et 12b sont parcourus par des courants électriques permettant un dégagement de chaleur par effet Joule.

Dans la zone située entre les galets du jeu 14 dans laquelle les feuillards 12a et 12b sont appliqués avec une certaine pression de placage contre la surface extérieure de l'ébauche 10, l'ébauche 10 et les feuillards 12a et 12b sont à une température permettant la réalisation d'une liaison de placage à l'état solide entre les feuillards 12a et 12b et l'ébauche 10, sous l'effet de la compression imposée par le jeu de galets 14.

Les bords latéraux des feuillards 12a et 12b sont rapportés deux à deux l'un contre l'autre de manière parfaite pour assurer une liaison et une jonction entre ces bords latéraux des feuillards sur toute leur épaisseur et sur toute leur longueur sans que du cuivre de la couche externe 11 de l'ébauche 10 puisse pénétrer entre les bords des feuillards 12a et 12b rapportés l'un contre l'autre sous l'effet de la pression de placage.

Sur la figure 3, on a représenté la section transversale de l'ébauche 15 du fil électrode obtenu par placage des feuillards 12a et 12b en alliage cuivre, nickel, zinc sur la surface externe de l'ébauche 10 de l'âme du fil électrode constituée par un élément filiforme en acier recouvert de cuivre.

Les feuillards 12a et 12b fixés par placage à chaud et sous pression sur la surface extérieure de l'ébauche 10 de l'âme du fil électrode constituent une couche 12 continue de revêtement coaxiale à l'ébauche 10. Les bords des feuillards 12a et 12b rapportés deux à deux l'un contre l'autre constituent des zones de jonction 16 et 16' sensiblement planes et disposées dans un plan axial de l'ébauche 15. L'espace entre les feuillards 12a et 12b est parfaitement fermé de sorte que le cuivre de la couche 11 ne peut pénétrer dans un interstice entre les bords des feuillards 12a et 12b dans leur zone de jonction 16 et 16'. Cette jonction bord à bord des feuillards 12a et 12b suivant toute leur épaisseur est continue suivant toute la longueur de l'ébauche 15 et des feuillards de placage de l'ébauche.

L'un des avantages du procédé suivant l'invention est de réaliser le revêtement protecteur 12 en alliage cuivre, nickel, zinc autour de l'ébauche 10 de l'âme du fil électrode à partir de feuillards de composition chimique parfaitement homogène qui ne sont pas refondus pendant l'opération de placage. De ce fait, la composition de la couche de revêtement 12 est parfaitement homogène et invariable dans toute l'épaisseur de la couche externe de l'ébauche 15.

Un autre avantage du procédé suivant l'invention est de permettre l'utilisation de feuillards en alliage cuivre, nickel, zinc constituant des produits métallurgiques connus et fabriqués industriellement.

Les alliages cuivre, nickel, zinc connus dans l'état de la technique et produits industriellement sont généralement connus sous le nom maillechort, ces alliages étant utilisés en particulier pour leur bel aspect et leur tenue à la corrosion.

On utilise pour la mise en oeuvre de l'invention des feuillards de maillechort dont l'épaisseur est comprise entre 0,3 et 1,5 mm. La largeur des bandes utilisées pour le placage dépend du diamètre de l'ébauche de l'âme de fil électrode à recouvrir par placage.

De préférence, l'alliage cuivre, nickel, zinc constituant la couche externe de l'ébauche de fil électrode 15 dont la composition correspond à la composition des bandes de feuillards utilisées pour réaliser le placage, a une teneur en nickel comprise entre 10 et 40 % en poids et de préférence entre 15 et 25 % et une teneur en zinc comprise entre 5 et 30 % en poids et de préférence entre 10 et 30 %, le cuivre représentant le solde de l'alliage.

Il est à remarquer que le procédé de revêtement par placage de feuillards sur la surface extérieure d'un produit long métallique à section circulaire est bien adapté au cas où le métal constituant le feuillard de placage présente une dureté et une résistivité électrique inférieures à la dureté et à la résistivité électrique du produit long métallique dont on réalise le placage. Par exemple, ce procédé est particulièrement bien adapté au cas du revêtement par placage d'un produit long en acier par une couche de cuivre. On applique d'ailleurs ce procédé de manière préférentielle pour obtenir l'ébauche 10 du fil électrode comportant un élément central 9 en acier et une couche externe de cuivre 11.

En revanche, le procédé de revêtement par placage de feuillards est peu adapté au cas où le feuillard présente une dureté et une résistivité électrique supérieures à celle du produit long métallique sur lequel on réalise le placage.

Dans le cas où l'on effectue le placage de feuillards en maillechort sur une couche de cuivre déposée sur un élément central en acier, le maillechort présente une dureté et une résistivité électrique sensiblement supérieures à la dureté et à la résistivité électrique du cuivre.

De manière inattendue, cependant, il a été possible d'obtenir des produits plaqués de grande qualité comportant une âme revêtue de cuivre et une couche externe en maillechort.

Une seconde étape du procédé suivant l'invention, après réalisation du revêtement de l'ébauche de l'âme du fil électrode par placage consiste à tréfiler l'ébauche 15 obtenue à l'issue du placage du revêtement externe, jusqu'à obtenir un fil dont le diamètre correspond au diamètre nominal du fil électrode dont on réalise la fabrication.

De manière générale, on effectue le tréfilage d'une ébauche 15 de départ dont le diamètre est compris entre 8 et 10 mm pour obtenir, à l'issue de l'étape finale du tréfilage, un fil électrode dont le diamètre peut être compris entre 0,05 et 0,50 mm.

La réduction du diamètre de l'ébauche jusqu'au diamètre final du fil électrode nécessite la mise en oeuvre du tréfilage, dans la mesure où le laminage ne permet pas d'obtenir des diamètres aussi faibles que ceux des fils électrodes.

Le tréfilage est réalisé, de manière classique, par passages successifs des produits dans des filières ayant des ouvertures de taille décroissante.

Le tréfilage jusqu'au diamètre final du fil électrode peut être réalisé sans recuit des produits entre deux opérations de tréfilage mais il est également possible d'effectuer au moins un recuit intermédiaire sous atmosphère contrôlée du produit en cours de tréfilage, lorsque son diamètre est compris entre 0,5 et 3 mm. Le recuit peut être effectué en un temps très court de l'ordre de quelques dizaines de secondes, de telle sorte que des éléments ne puissent diffuser entre la couche de cuivre de l'âme du produit et la couche externe constituée par l'alliage ternaire cuivre, nickel, zinc.

Du fait que les dimensions et caractéristiques géométriques du fil électrode obtenu après tréfilage sont fonctions des caractéristiques correspondantes de l'ébauche de départ, certaines dimensions et caractéristiques du fil électrode peuvent être facilement ajustée à partir des caractéristiques correspondantes de l'ébauche de fil électrode.

L'épaisseur de la couche externe en alliage ternaire du fil électrode dont la conductibilité électrique est comprise entre 4 et 10 % IACS et de préférence entre 8 et 10 % peut être ajustée à une valeur telle que la conductibilité électrique du fil électrode soit supérieure à 30 % IACS et de préférence supérieure à 40 % IACS, l'âme en acier plaqué de cuivre du fil électrode possédant une conductibilité électrique comprise entre 35 et 70 % IACS et de préférence entre 50 et 60 % IACS. La conductibilité électrique du fil électrode composite selon l'invention est donc supérieure à la conductibilité électrique du laiton. Le fil électrode obtenu par le procédé de l'invention peut donc permettre le passage de fortes densités de courant pendant l'usinage.

En outre, du fait qu'il est possible de déposer par placage sur l'ébauche de l'âme du fil électrode, une couche d'alliage ternaire d'une faible épaisseur, par exemple comprise entre 0,3 et 1,5 mm, on obtient en définitive sur le fil électrode après tréfilage, une très fine couche externe de protection en alliage ternaire, ce qui permet d'obtenir un fil électrode de conductibilité électrique supérieure à 40 % IACS en utilisant une âme ayant une conductibilité de 50 % IACS seulement. On réduit ainsi le coût d'obtention de l'âme constituée par un fil d'acier revêtu de cuivre.

Les figures 2 et 3 qui ont été décrites comme représentant la section transversale de l'ébauche de l'âme du fil électrode et de l'ébauche du fil électrode, respectivement, peuvent également représenter la section de l'âme du fil électrode ou du fil électrode ou encore d'un produit intermédiaire obtenu en cours de tréfilage.

On voit en particulier que le fil électrode ne comporte pas de couche intermédiaire de liaison entre l'âme et la couche externe.

Par rapport aux techniques connues antérieurement, le procédé suivant l'invention présente des avantages qui seront rappelés ci-dessous.

La couche extérieure protectrice du fil est réalisée en utilisant des alliages de composition chimique parfaitement homogène, si bien qu'elle présente des caractéristiques constantes, en particulier suivant toute son épaisseur. La couche externe qui subit une érosion pendant l'usinage exerce un rôle de barrière thermique constant tout au long du passage du fil électrode au travers de la pièce à usiner.

Du fait qu'on réalise le dépôt de la couche externe sur une ébauche de l'âme du fil électrode de diamètre important, cette opération de dépôt est très productive, si bien que son coût reste modéré. La technique de placage permet de déposer en une seule opération une épaisseur de matériau qui peut être importante. Le dépôt d'une couche de placage épaisse permet d'augmenter la précision dimensionnelle de la couche externe protectrice du fil électrode obtenu après tréfilage et/ou laminage. On peut déterminer facilement et de manière très précise l'épaisseur optimale de la couche externe du fil électrode, en choisissant l'épaisseur de la couche déposée par placage.

Le dépôt par placage de la couche externe permet de réaliser celle-ci en des alliages ternaires cuivre-nickel-zinc, de composition définie, ou des alliages comportant les éléments cuivre, nickel et zinc et tout autre élément d'addition qui pourrait s'avérer nécessaire.

Dans tous les cas, le fait que les alliages contiennent du zinc permet d'améliorer l'effet protecteur de la couche externe, du fait que le zinc est un matériau présentant une basse température de vaporisation.

Les alliages cuivre, nickel, zinc, pour une teneur en nickel comprise entre 10 et 40 % en poids et une teneur en zinc comprise entre 5 et 30 % en poids ont une conductivité thermique comprise entre 20 et 40W/m.°C. Ces matériaux sont de meilleurs isolants thermiques que le zinc dont la conductivité thermique est d'environ 110 W/m.°C et que le laiton dont la conductivité thermique est d'environ 120 W/m.°C. Les alliages ternaires cuivre, nickel, zinc utilisés dans le cadre de l'invention ont une conductivité thermique qui est au moins dix fois plus faible que celle du cuivre et de trois à six fois plus faible que celle du zinc et du laiton. Il en résulte un très bon effet protecteur de la couche externe obtenue par le procédé suivant l'invention.

Certains alliages binaires cuivre, nickel ou ternaires cuivre, nickel, zinc qui présentent une teneur en nickel plus élevée que les alliages mentionnés ci-dessus ont une conductivité thermique plus faible que celle de ces alliages. Cependant, il est préférable d'utiliser les alliages dont la composition a été mentionnée et qui présentent une résistivité électrique comprise entre 19 et 40 µΩcm, puisqu'ainsi on peut obtenir un fil électrode ayant une conductibilité électrique supérieure à 30 % IACS et de préférence supérieure à 40 % IACS avec une âme ayant une conductivité électrique de l'ordre de 50 % IACS.

Les alliages du type maillechort utilisés pour réaliser le revêtement par placage présentent une très bonne résistance à la corrosion, si bien que le fil électrode obtenu peut être stocké sans risque dans les ateliers ou l'on effectue l'usinage par électroérosion.

Les alliages du type maillechort utilisés pour le placage durcissent fortement par écrouissage, si bien qu'on obtient par tréfilage ou éventuellement tréfilage et laminage de l'ébauche plaquée un fil électrode dont la couche superficielle de grande dureté assure une protection très efficace du fil lors de son passage sur les poulies de guidage de la machine d'usinage par électroérosion.

Du fait que les maillechorts sont utilisés industriellement dans d'autres applications que le placage, leur coût d'obtention est très inférieur à celui d'alliages élaborés à la demande.

L'écrouissage de l'ébauche au cours du tréfilage pour obtenir le fil électrode à son diamètre final permet d'augmenter la résistance mécanique à la rupture du fil d'acier constituant une partie de l'âme du fil électrode.

Le procédé suivant l'invention permet d'obtenir un fil électrode dont l'âme présente une résistance mécanique comprise entre 500 et 1200 MPa. Cette résistance mécanique peut être facilement réglée en effectuant un recuit du produit en cours de tréfilage, comme indiqué plus haut. Ce recuit est d'autre part effectué dans des conditions telles qu'il n'entraîne pas de diffusion des éléments chimiques constituant les différents couches du fil.

Il peut être avantageux de réaliser un fil électrode comportant une fine couche d'oxyde d'éléments tels que le nickel, le cuivre ou le zinc, d'une épaisseur inférieure à 1 µm, sur sa surface externe. Une telle couche externe présente des propriétés semi-conductrices et réduit ainsi fortement les risques de court-circuit entre le fil électrode et la pièce à usiner. Une telle couche mince d'oxyde peut être obtenue en réalisant une légère oxydation de la couche externe protectrice en alliage ternaire, soit au cours de l'opération de placage, soit au cours du recuit intermédiaire pendant le tréfilage, en prévoyant une atmosphère contrôlée à l'intérieur du four.

L'invention ne se limite pas au mode de réalisation qui a été décrit.

C'est ainsi qu'il est possible de réaliser l'ébauche du fil électrode comportant l'ébauche de l'âme du fil électrode et la couche externe plaquée, sans opération préalable de réalisation d'une ébauche de l'âme par revêtement d'un fil d'acier.

On réalise le placage sur un produit long en acier qui peut être une tige ou un fil de diamètre relativement important, de bandes métalliques composites qui comportent une couche interne de cuivre et une couche externe de maillechort. L'opération de placage assure la liaison entre la couche interne des bandes métalliques en cuivre et le produit long en acier.

Les bandes métalliques composites peuvent être obtenues par une opération préalable de placage d'une bande de cuivre sur une face d'un feuillard en maillechort ou par toute autre opération de revêtement par une couche de cuivre d'une face d'un feuillard en maillechort.

L'opération préalable de fabrication des bandes métalliques de placage peut être préférable à une opération préalable de revêtement d'un produit en acier de section circulaire par des bandes de cuivre, dans la mesure où cette opération peut être réalisée de manière rapide et peu coûteuse, par exemple par colaminage de bandes de maillechort et de cuivre.

La seconde phase du procédé suivant l'invention permettant de réduire les dimensions de la section de l'ébauche, jusqu'à obtenir un fil électrode, qui a été désignée par le terme de tréfilage, peut comporter certaines opérations initiales de laminage. Toutefois, la réduction de section jusqu'à obtenir le fil électrode nécessite toujours des opérations de tréfilage par passage dans des filières de diamètres décroissants.

Il est possible d'utiliser pour réaliser le revêtement par placage, des feuillards en des alliages cuivre, nickel, zinc ayant des compositions différentes de celles qui ont été indiquées.

Le procédé suivant l'invention qui est très bien adapté à la production de fils électrodes pour usinage par électroérosion pourrait être utilisé éventuellement pour la fabrication de fils stratifiés de petit diamètre destinés à un autre usage. De tels fils de petit diamètre ayant une âme constituée par de l'acier et un matériau à forte conductibilité électrique et une couche externe contenant un alliage ternaire de cuivre, de nickel et de zinc peuvent avoir des applications, par exemple dans le domaine des composants électroniques.

## Revendications

1. Procédé de fabrication d'un fil stratifié de petit diamètre et en particulier d'un fil électrode (3) pour usinage par électroérosion comportant une âme constituée par de l'acier et un matériau à forte conductibilité électrique et une couche externe contenant du cuivre, du nickel et du zinc, caractérisé par le fait :
- qu'on réalise un revêtement (12) sur la surface externe d'un produit long (10) à section circulaire au moins partiellement en acier, dont le diamètre est supérieur au diamètre de l'âme du fil stratifié (3) à obtenir, par placage sur la surface externe du produit long (10) chauffé, de deux bandes métalliques (12a, 12b) comprenant chacune au moins une couche en un alliage de composition homogène renfermant du cuivre, du nickel et du zinc, les bandes métalliques (12a, 12b) étant chauffées et appliquées avec pression contre la surface externe du produit long (10), et
- qu'on tréfile ensuite le produit long (10) revêtu par placage constituant une ébauche (15), jusqu'à obtenir le fil stratifié (3) de petit diamètre.

2. Procédé suivant la revendication 1, caractérisé par le fait que le produit long (10) comporte un élément central (9) en acier et une couche externe (11) en cuivre et qu'il constitue une ébauche de l'âme du fil stratifié (3), les bandes métalliques (12a, 12b) étant constituées par des feuillards en alliage de cuivre, de nickel et de zinc.

3. Procédé suivant la revendication 2, caractérisé par le fait que les feuillards (12a, 12b) sont des feuillards en maillechort constituant des produits industriels connus.

4. Procédé suivant la revendication 1, caractérisé par le fait que le produit long à section circulaire (10) est un fil ou une tige en acier et que les bandes métalliques (12a, 12b) sont constituées par des feuillards en alliage de cuivre, nickel et zinc, revêtus sur l'une de leurs faces par une couche de cuivre.

5. Procédé suivant l'une quelconque des revendications 1 à 4, caractérisé par le fait que le produit long (10) à section circulaire est constitué au moins partiellement par un acier stabilisé au titane ayant une teneur pondérale en carbone inférieure à 0,050 % et qui renferme en poids, de 0,10 à 0,30 % de titane, de 0,01 à 0,07 % d'aluminium, de 0,10 à 0,50 % de manganèse, le reste de l'alliage étant constitué par du fer et des impuretés résultant de l'élaboration.

6. Procédé selon la revendication 5, caractérisé en ce que l'acier contient, en poids :
- moins de 0,025 % de carbone
- de 0,15 à 0,25 % de titane
- de 0,02 à 0,06 % d'aluminium
- de 0,15 à 0,25 % de manganèse.

7. Procédé suivant l'une quelconque des revendications 1 à 6, caractérisé par le fait que le produit long à section circulaire (10) a un diamètre compris entre 8 et 10 mm.

8. Procédé suivant l'une quelconque des revendications 1 à 7, caractérisé par le fait que les bandes métalliques (12a, 12b) ont une épaisseur comprise entre 0,3 et 1,5 mm.

9. Procédé suivant l'une quelconque des revendications 1 à 8, caractérisé par le fait que les bandes métalliques (12a, 12b) sont appliquées puis plaquées avec pression contre la surface externe du produit long (10) par des surfaces de guidage et de formage d'un boîtier de guidage (13), puis entre les galets d'un jeu de galets (14) assurant un placage des bandes métalliques (12a, 12b) avec une jonction des bords latéraux des bandes métalliques (12a, 12b) deux à deux suivant des zones de jonction (16, 16') s'étendant suivant toute l'épaisseur et suivant toute la longueur des bandes métalliques (12a, 12b).

10. Procédé suivant l'une quelconque des revendications 1 à 9, caractérisé par le fait que le produit long (10) revêtu par placage constituant l'ébauche (15) est laminé puis tréfilé.

11. Procédé suivant l'une quelconque des revendications 1 à 10, caractérisé par le fait qu'on réalise un recuit intermédiaire de l'ébauche (15) entre deux passes de tréfilage lorsque l'ébauche a un diamètre intermédiaire compris entre 0,5 et 3 mm, lors de son tréfilage pour obtenir un fil électrode ayant un diamètre compris entre 0,05 et 0,50 mm.

12. Fil électrode pour usinage par électroérosion comportant une âme métallique constituée par de l'acier et un matériau à forte conductibilité électrique et une couche externe contenant du cuivre, du nickel et du zinc, caractérisé par le fait que la couche externe du fil électrode (3) présente une composition chimique totalement homogène et constante, en particulier suivant son épaisseur.

13. Fil électrode suivant la revendication 12, caractérisé par le fait que l'âme métallique est constituée d'un fil central en acier stabilisé au titane ayant une teneur pondérale en carbone inférieure à 0,025 % et qui renferme en poids, de 0,15 à 0,25 % de titane, de 0,02 à 0,06 % d'aluminium, de 0,15 à 0,25 % de manganèse, le reste de l'alliage étant constitué par du fer et des impuretés résultant de l'élaboration, revêtu d'une couche de cuivre d'épaisseur telle que la conductibilité électrique de l'âme métallique soit comprise entre 35 et 70 % IACS, et
- que la couche externe est constituée par un alliage ternaire cuivre, nickel, zinc, dont la teneur en nickel est comprise entre 10 et 40 % en poids et la teneur en zinc comprise entre 5 et 30 % en poids, le solde de l'alliage étant constitué par du cuivre.

14. Fil électrode suivant l'une quelconque des revendications 12 et 13, caractérisé par le fait que la couche externe de composition chimique homogène est fixée directement sur l'âme métallique sans couche de liaison intermédiaire.

15. Fil électrode suivant l'une quelconque des revendications 12 à 14, caractérisé par le fait que sa conductibilité électrique est supérieure à 30 % IACS.

16. Fil électrode suivant l'une quelconque des revendications 12 à 15, caractérisé par le fait que la couche externe est revêtue sur sa surface extérieure par une couche d'oxyde d'une épaisseur inférieure à 1 µm.

17. Fil électrode suivant l'une quelconque des revendications 12 à 16, caractérisé par le fait que son âme métallique présente une résistance mécanique à la rupture comprise entre 500 et 1200 MPa.

18. Fil électrode suivant l'une quelconque des revendications 12 à 17, caractérisé par le fait que son diamètre est compris entre 0,05 et 0,50 mm.
